(19) Europäisches Patentamt
European Patent Office
Office européen des brevets

(11) Veröffentlichungsnummer: **0 379 107**
**A2**

(12) # EUROPÄISCHE PATENTANMELDUNG

(21) Anmeldenummer: **90100694.0**

(22) Anmeldetag: **13.01.90**

(51) Int. Cl.[5]: **C08L 63/00, C08L 77/00, C08G 73/02**

(30) Priorität: **18.01.89 DE 3901279**

(43) Veröffentlichungstag der Anmeldung: **25.07.90 Patentblatt 90/30**

(84) Benannte Vertragsstaaten: **AT BE CH DE ES FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Marten, Manfred**
**Am Eiskeller 55**
**D-6500 Mainz(DE)**
Erfinder: **Godau, Claus**
**Halbritter Strasse 9**
**D-6229 Kiedrich(DE)**
Erfinder: **Schmelzer, Heinz**
**Schlossbergstrasse 15**
**D-6531 Rümmelsheim(DE)**

(54) **Verwendung von polyamidoaminen als Härter für Epoxidharze und diese enthaltende härtbare Mischungen.**

(57) Die Erfindung betrifft die Verwendung von primäre und/oder sekundäre Aminogruppen enthaltenden Polyamidoaminen (A) als Härter für epoxygruppenhaltige Verbindungen (B), dadurch gekennzeichnet, daß als Polyamidoamine (A) solche Verbindungen eingesetzt werden, die erhalten wurden durch Polykondensation von (a) Verbindungen aus der Gruppe Dicarbonsäuren, die Oxalkylengruppen enthalten, oder deren Derivate (Ester) mit (b) Polyaminen, die mindestens zwei, mit (a) kondensationsfähige Aminogruppen enthalten.

Weiterhin bezieht sich die Erfindung auf härtbare Mischungen, welche die vorstehenden Komponenten (A) und (B) enthalten. Die erfindungsgemäß erhältlichen Härtungsprodukte besitzen Vorteile hinsichtlich der Schlag- und Stoßfestigkeit, der Elastizität auch bei tieferen Temperaturen und der rißüberbrückenden Eigenschaften.

EP 0 379 107 A2

# Verwendung von Polyamidoaminen als Härter für Epoxidharze und diese enthaltende härtbare Mischungen

Epoxidharze, insbesondere solche, die aus Bisphenol A und Epichlorhydrin hergestellt werden, sind bekannte Rohstoffe für die Herstellung von qualitativ hochwertigen Gießharzen und Beschichtungsmassen. Die mit Polyaminen gehärteten aromatischen Epoxidharze besitzen neben guter Chemikalien-und Lösungsmittelbeständigkeit eine gute Haftfestigkeit auf vielen Untergründen. Lösungsmittelfrei verarbeitbaren, möglichst niedrigviskosen Bisphenol-A-Epoxidharzen kommt u.a. eine erhebliche Bedeutung für den Schutz und die Sanierung von Betonbauwerken zu. Die Härtung der Epoxidharze kann bei Verwendung von Polyaminen bei Umgebungstemperatur erfolgen.
Häufig ist die Anwendbarkeit der Epoxidharz/Polyamin-Systeme jedoch begrenzt durch eine unzureichende Elastizität bzw. Flexibilität im vernetzten Zustand. Für eine dauerhafte Rißüberbrückung werden Beschichtungsstoffe gefordert, die aufgrund ihrer hohen Elastizität über dem Riß "arbeiten" und dabei große Temperaturwechselbelastungen durch eine hohe Dehnbarkeit auffangen können.
Darüber hinaus werden auf dem Klebstoffsektor elastische Epoxidharzsysteme benötigt, die noch bei tiefen Temperaturen (z.B. bis zu -30 °C) eine ausreichende Elastizität aufweisen.

Prinzipiell kann man zwar extern durch Weichmacherzusatz oder intern durch Verringerung der Vernetzungsdichte die Elastizität von Epoxidharzsystemen erhöhen. Externe Elastifizierungsmittel sind jedoch nicht reaktiv und werden nicht in das Duromer-Netzwerk eingebaut. Als externe Weichmacher können Teer, Phthalsäureester, hochsiedende Alkohole, Ketonharze, Vinylpolymere und andere mit Epoxidharzen und Aminhärtern nicht reagierende Produkte eingesetzt werden. Diese Art der Modifizierung ist allerdings nur auf spezifische Anwendungsgebiete beschränkt, da sie eine Reihe von Nachteilen aufweist. So führen diese Zusätze zu einer starken Störung der Duromerstruktur, sind in ihrem Weichmachungseffekt zu tiefen Temperaturen hin begrenzt und neigen bei Temperaturbeanspruchung und Alterung zum Ausschwitzen. Zur internen Erhöhung der Elastizität werden mit den Epoxidharzen oder Härtern reagierende Verbindungen, die in die Vernetzung mit einbezogen werden, zugesetzt. Im einzelnen wird die elastifizierende Wirkung durch Einbau von langkettigen aliphatischen oder stark verzweigten Zusätzen, z.B. in die Härterkomponente, erreicht. In der Praxis läßt sich so die Elastizität der Epoxidharzsysteme in gewissem Umfang durch den Einsatz von bestimmten Härtungsmitteln steuern. So können die gebräuchlichen Polyamine wie z.B. Ethylendiamin, Diethylentriamin, Triethylentetramin durch Umsetzung mit längerkettigen mehrbasischen Säuren in Polyamidoamine umgewandelt werden. Diese schon lange in erheblichem Umfang gebräuchlichen Härtungsmittel liefern ein befriedigendes Eigenschaftsbild weicher Härter für Epoxidharze, erfüllen aber nicht die Forderungen für ein zäh-elastisches Epoxidharzsystem, wie es für viele Anwendungen nötig ist.

Ziel der Erfindung war es daher, Härter sowie diese enthaltende härtbare Mischungen auf Basis von Epoxidharzen bereitzustellen, welche die Nachteile der bekannten Systeme nicht oder zumindest nur in vermindertem Umfange aufweisen.

Es wurde nun gefunden, daß spezielle Polyamidoamine, hergestellt aus Oxalkylengruppen enthaltenden Dicarbonsäuren oder deren Derivaten und Polyaminen oder teilweise vorvernetzte Addukte dieser Polyamidoamine mit epoxygruppenhaltigen Verbindungen überraschenderweise diese Nachteile nicht zeigen. Härtbare Massen aus diesen Härtern und epoxygruppenhaltigen Verbindungen (Epoxidharzen) liefern vielmehr gut haftende Überzüge oder Klebstoffe, Flächengebilde, Dichtungsmassen, Formteile udgl. mit hoher Schlag- und Stoßfestigkeit, hoher Elastizität auch bei tiefen Temperaturen sowie guten rißüberbrückenden Eigenschaften.

Die Erfindung betrifft daher die Verwendung von primäre und/oder sekundäre Aminogruppen enthaltenden Polyamidoaminen (A) als Härter für epoxygruppenhaltige Verbindungen (B), dadurch gekennzeichnet, daß als Polyamidoamine (A) solche Verbindungen eingesetzt werden, die erhalten wurden durch Polykondensation von (a) Verbindungen aus der Gruppe Dicarbonsäuren, die Oxalkylengruppen enthalten, oder deren Derivate mit (b) Polyaminen, die mindestens zwei mit (a) kondensationsfähige Aminogruppen enthalten.

Weiterhin bezieht sich die Erfindung auf härtbare Mischungen, enthaltend diese Polyamide (A) und epoxigruppenhaltige Verbindungen (B) sowie gegebenenfalls Verdünnungsmittel (C) und gegebenenfalls Zusatzstoffe (D).

Die erfindungsgemäß eingesetzten Polyamidoamine (A), die vorzugsweise linearen Kettenaufbau besitzen, enthalten im Durchschnitt pro Molekül mindestens 2, vorzugsweise 2 bis 4 primäre und/oder sekundäre Aminogruppen, wovon mindestens eine Aminogruppe vorzugsweise primär ist. Vorzugsweise enthalten diese Polamidoamine 2 primäre Aminogruppen oder 2 primäre und 2 sekundäre Aminogruppen.

Grundsätzlich sind auch Polyamidoamine ohne primäre Aminogruppen, dafür z.B. mit 2 oder mehr sekundären Aminogruppen, einsetzbar, jedoch ist diese Variante in der Regel weniger vorteilhaft. Die Aminzahl liegt im allgemeinen zwischen 8 und 900, vorzugsweise zwischen 50 und 500, und insbesondere zwischen 100 und 400 mg KOH/g, während die Säurezahl zumeist 0,01 bis 10, vorzugsweise 0,01 bis 3 mg KOH/g beträgt. Weiterhin besitzen diese Polyaminoamide (A) Wasserstoffaktiväquivalente von im allgemeinen 50 bis 3500, vorzugsweise 50-500 und insbesondere 70-300, sowie mittlere Molekulargewichte $M_n$ - (Zahlenmittel) von 200 bis 15000, vorzugsweise von 200 bis 2500.

Je nach Art der Ausgangskomponenten (a), (b) und deren Molverhältnis sowie dem Molekulargewicht von (A) handelt es sich bei diesen Polyamidoaminen um niedrigviskose bis hochviskose oder feste Produkte, die ggf. je nach ihrer Verwendung auch in einem organischen Lösungsmittel oder in Wasser eingesetzt werden können.

Die Herstellung der Polyamidoamine (A) erfolgt in bekannter Weise durch Umsetzung der Verbindungen (a) mit den Polyaminen (b) z.B. durch mehrstündiges Erhitzen der Komponenten unter Ausschluß von Sauerstoff auf Temperaturen von 125-250 °C, vorzugsweise 150-190 °C, zunächst unter gewöhnlichem Druck und dann ggf. unter vermindertem Druck. Verwiesen sei in diesem Zusammenhang auf Sato, Iwabuchi, Böhmer und Kern (Makromol. Chem. 182, Seiten 755-762 (1981)), Kern, Kämmerer, Böhmer und Bhagwat (Angewandte Makromolekulare Chemie 113, Seiten 53-59 (1983)), Imai, Ogata, Kakimoto (Makromol. Chem., Rapid Commun. 5, 47-51 (1984)) sowie auf die DE-Offenlegungsschrift 2.658.714, die JP-Offenlegungsschrift 84/1532 und die EP-Offenlegungsschrift 332.967. Die hierin beschriebenen Polyamidoamine können auch erfindungsgemäß eingesetzt werden, sofern sie die weiter oben genannten Eigenschaften aufweisen.

Die Verbindungen (a) stellen Oxalkylen-, vorzugsweise Oxethylengruppen enthaltende Dicarbonsäuren oder deren mit (b) reaktiven Derivate, wie Anhydride, Halogenide und insbesondere Ester, dar. Vorzugsweise besitzen diese Verbindungen (a) die Formel (I)

$R^2OOC\text{-}CH_2\text{-}[\text{-}O\text{-}R^1\text{-}]_nO\text{-}CH_2\text{-}COOR^2$ (I)

in der bedeuten

$R^1$ = verzweigter oder unverzweigter Alkylenrest mit 2 bis 5, vorzugsweise 2 C-Atomen;

$R^2$ = unabhängig voneinander Wasserstoff oder ein verzweigter oder unverzweigter Alkylrest mit 1 bis 6, vorzugsweise 1 bis 3 C-Atomen;

n = 0 oder eine ganze Zahl von 1 bis 300, vorzugsweise 1 bis 50 und insbesondere 1 bis 25.

Beispiele für Verbindungen (a) sind:

3,6-Dioxaoctandisäure, 3,6,9-Trioxaundecandisäure, Polyglycoldisäure mit einem Molgewicht von ca. 400, bevorzugt von ca. 600 oder Mischungen dieser Säuren.

Die Herstellung dieser Verbindungen (a) ist bekannt (vgl. beispielsweise die DE-OS 2.936.123) und erfolgt z.B. durch Oxidation von Polyglykolen in Gegenwart von Katalysatoren.

Die Verbindungen (a) können gegebenenfalls auch bis zu 40 %, vorzugsweise bis zu 30 % einer aliphatischen, cycloaliphatischen oder aromatischen Dicarbonsäure bzw. Gemische dieser Säuren enthalten.

Als aliphatische Dicarbonsäuren, deren aliphatischer Rest im allgemeinen 1 bis 20, vorzugsweise 2 bis 12 C-Atome enthält, seien beispielsweise Bernsteinsäure, Glutarsäure, Adipinsäure, Korksäure, Azelainsäure, Sebacinsäure und Dodecandisäure genannt.

Geeignete cycloaliphatische Carbonsäuren, deren cycloaliphatischer Rest zumeist 5 bis 12, vorzugsweise 6 bis 8 C-Atome umfaßt, sind z.B. die verschiedenen Cyclohexandicarbonsäure-Isomeren, Hexahydrophthalsäure und Tetrahydrophthalsäure.

Als aromat. Dicarbonsäuren können z.B. verwendet werden: Terephthalsäure, Isophthalsäure, o-Phthalsäure oder verschiedene Naphthalin-dicarbonsäuren, beispielsweise 2,6-Naphthalindicarbonsäure. Besonders bevorzugt ist dabei Terephthalsäure. Es können auch Gemische der aromatischen Dicarbonsäuren eingesetzt werden.

Weitere geeignete aromatische Carbonsäuren sind solche des Typs

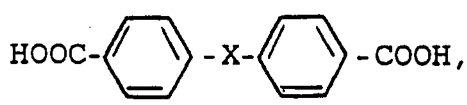

wobei X für eine chemische Bindung, für Alkylenreste mit 1 bis 6 C-Atomen, für O oder CO steht.

Die Polyamine (b), die mit den Verbindungen (a) zu den Polyamidoaminen (A) umgesetzt werden, besitzen mindestens zwei mit (a) kondensationsfähige Aminogruppen, von denen vorzugsweise mindestens eine primär ist; besonders bevorzugt enthält (b) 2 primäre Aminogruppen. Hierfür geeignet sind beispielsweise solche der Formel (II)

$$\overset{R^4}{\overset{|}{HN}}-\left[-R^3-\overset{R^5}{\overset{|}{N}}-\right]_m-R^3-\overset{R^6}{\overset{|}{NH}} \qquad (II)$$

in der bedeuten

$R^3$ = unabhängig voneinander zweiwertiger Kohlenwasserstoffrest mit 1 bis 20, vorzugsweise 2 bis 12 C-Atomen, vorzugsweise verzweigter oder unverzweigter Alkylenrest mit 1 bis 20, vorzugsweise 2 bis 6 C-Atomen, Cycloalkylenrest mit 5 bis 12, vorzugsweise 6 bis 10 C-Atomen oder Aralkylenrest mit 7 bis 12, vorzugsweise 8 bis 10 C-Atomen;

$R^4$, $R^5$, $R^6$ = unabhängig voneinander Wasserstoff, Kohlenwasserstoffrest mit 1 bis 20, vorzugsweise 1 bis 12 C-Atomen, vorzugsweise verzweigter oder unverzweigter Alkylrest mit 1 bis 20, vorzugsweise 1 bis 6 C-Atomen, Cycloalkylenrest mit 5 bis 12, vorzugsweise 6 bis 10 C-Atomen oder Aralkylenrest mit 7 bis 12, vorzugsweise 8 bis 10 C-Atomen, wobei diese Reste auch durch Heteroatome unterbrochen sein können oder

$R^4$ und $R^5$ = Teil eines vorzugsweise gesättigten Ringsystems mit 3 bis 8, vorzugsweise 3 und 4 C-Atomen;

m = 0 oder eine ganze Zahl von 1 bis 8, vorzugsweise 0 und 1 bis 4.

Vorzugsweise steht $R^4$ und/oder $R^6$ für Wasserstoff.

Beispiele für derartige Polyamine (b) sind: Ethylendiamin, 1,2-Diaminopropan, 1,3-Diaminopropan, 1,3-Diaminobutan, 1,4-Diaminobutan, 1-Amino-3-methylamino-propan, 2-Methylpentamethylendiamin, Pentamethylendiamin, Hexamethylendiamin, Trimethylhexamethylendiamin, Neopentyldiamin, Octamethylendiamin, cycloaliphatische Diamine wie 1,2-, 1,3- oder 1,4-Cyclohexandiamin; 4,4′-Methylen-bis-cyclohexylamin, Isophorondiamin, Menthandiamin, 4,4′-Diamino-3,3′-dimethyl-dicyclohexylmethan, 3-Aminoethyl-1-(3-aminopropyl-1-methyl)-4-methylcyclohexan, N-Methylethylendiamin, N-Aminoethylpiperazin, Xylylendiamin, Tricyclododecyldiamin, N-Cyclohexylpropandiamin, Methyl-bis-(3-aminopropyl)-amin, Ethyl-bis-(3-aminopropyl)-amin, N-(3-Aminopropyl)-tetramethylendiamin, N,N′-Bis-(3-aminopropyl)-tetramethylendiamin, Polyalkylenpolyamine, wie Di-propylen-(1,2)-triamin, Bis-(3-amino-propyl)-amin, Tripropylen-(1,2)-tetramin, Diethylentriamin, Triethylentetramin und Tetraethylenpentamin, die handelsüblichen primären aliphatischen Polyoxipropylen-di- oder triamine sowie Etherdiamine wie z.B. 1,7-Diamino-4-oxa-heptan, 1,7-Diamino-3,5-dioxa-heptan, 1,10-Diamino-4,7-dioxa-decan, 1,10-Diamino-4,7-dioxa-5-methyldecan, 1,11-Diamino-4,8-dioxaundecan, 1,11-Diamino-4,8-dioxa-5-methyl-undecan, 1,12-Diamino-4,9-dioxa-dodecan, 1,13-Diamino-4,10-dioxatridecan, 1,13-Diamino-4,7,10-trioxa-5,8-dimethyl-tridecan, 1,14-Diamino-4,7 10-trioxa-tetradecan, 1,16-Diamino-4,7,10,13-tetraoxahexadecan, 1,20-Diamino-4,17-dioxaeicosan. Besonders bevorzugt sind dabei 2-Methylpentandiamin, Diethylentriamin, Triethylentetramin, Isophorondiamin, m-Xylylendiamin und Trimethylhexamethylendiamin. Es können auch Mischungen dieser Amine eingesetzt werden.

Die Polyamidoamine (A) können nach einer Ausführungsform der Erfindung bereits teilweise mit epoxygruppenhaltigen Verbindungen, vorzugsweise den gleichen wie (B), umgesetzt (= vorvernetzt) sein, wodurch sich in manchen Fällen verbesserte Eigenschaften der Härtungsprodukte ergeben. Diese Vorvernetzung erfolgt durch Umsatz mit der epoxygruppenhaltigen Verbindung im Unterschuß, wobei im allgemeinen 0,1 bis 50 %, vorzugsweise 5 bis 25 % des aktiven Wasserstoffs, insbesondere der primären/sekundären Aminogruppen, von (A) zur Reaktion gebracht werden.

Als epoxygruppenhaltige Verbindungen (B) kommen eine Vielzahl der hierfür bekannten Verbindungen in Betracht, die im Mittel mehr als eine Epoxidgruppe, vorzugsweise 2 Epoxidgruppen, pro Molekül enthalten. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs-oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidylether, die sich von mehrwertigen Phenolen, insbesondere Bisphenolen sowie Novolaken ableiten und deren Epoxidäquivalentgewichte zwischen 160 und 500, insbesondere jedoch zwischen 160 und 200 liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4′-Dihydroxydiphenylcyclohexan, 4,4′-Dihydroxy-3,3′-dimethyldiphenylpropan, 4,4′-Dihydroxydiphenyl, 4,4′-Dihydroxybenzophenon, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl-)sulfon u.a. sowie die Chlorierungs- und Bromierungsprodukte der vorstehend genannten Verbindungen. Ganz besonders bevorzugt werden flüssige Diglycidylether auf Basis von Bisphenol A mit einem Epoxidäquivalentgewicht von 180 bis 190.

Es können auch Polyglycidylether von Polyalkoholen verwendet werden, wie z.B. Ethandiol-1,2-diglycidylether, Butandioldiglycidylether, Neopentylglycoldiglycidylether, Hexandioldiglycidylether, Polypropylenglycoldiglycidylether, Polyethylenglycoldiglycidylether, Mischpolyethylenpropylenglycoldiglycidylether, Glycidylether des Glycerins, Trimethylolpropans und des Pentaerythrits.

In besonderen Fällen können zusätzlich zu den Polyglycidylethern geringe Mengen reaktiver Verdünner, wie z.B. Butylglycidylether, Ethylhexylglycidylether, langkettige aliphatische Glycidylether, Monoglycidylether eines höheren isomeren Alkoholgemisches, Phenylglycidylether, Kresylglycidylether und p.t.-Butylphenylglycidylether in Mengen bis zu 30 %, vorzugsweise 10-20 %, bezogen auf Polyglycidylether mitverwendet werden.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure erhält. Beispiele sind Adipinsäurediglycidylester, Phthalsäurediglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A.M. Paquin, Springer Verlag, Berlin 1958, Kapitel IV, und in Lee Neville "Handbook of Epoxy Resins", 1967, Chapter 2. Weiterhin sei hier auf die EP-Offenlegungsschriften 272 595 und 286.933 verwiesen.

Es können auch Mischungen von mehreren Epoxidharzen verwendet werden.

Eine weitere Gruppe von Polyepoxidverbindungen, für welche die Härter (A) einsetzbar sind, stellen epoxidgruppenhaltige Acrylatharze dar, die in bekannter Weise unter Verwendung von epoxidgruppenhaltigen Monomeren hergestellt werden.

Statt der Polyepoxidverbindungen lassen sich auch deren Umetzungsprodukte mit $CO_2$ als Komponente (B) einsetzen. Diese Produkte enthalten 1,3-Dioxolan-2-on-Gruppen (cyclische Carbonatgruppen), die mit primären Aminen unter Ausbildung von Urethanen umgesetzt werden können. Je nach den Molverhältnissen von Polyepoxidverbindung und $CO_2$ erhält man bei der Reaktion mit $CO_2$ Verbindungen, die keine Epoxidgruppen mehr enthalten, oder Verbindungen, die Epoxidgruppen und cyclische Carbonatgruppen aufweisen. Derartige cyclische Carbonatgruppen lassen sich ggfs. auch über entsprechende Monomere, welche diese Gruppen enthalten, in die Polymerenkette einführen; siehe hierzu die DE-Offenlegungsschriften 36 44 372 und 36 44 373.

Die Polyepoxidverbindungen oder die cyclische Carbonatgruppen enthaltenden Verbindungen können als solche mit den Härtern (A) zur Reaktion gebracht werden; jedoch ist es häufig vorteilhaft, einen Teil der reaktionsfähigen Epoxidgruppen/cycl. Carbonatgruppen mit einem modifizierenden Material umzusetzen, um die Filmeigenschaften weiter zu verbessern. Besonders bevorzugt ist die Umsetzung der Epoxidgruppen/cycl. Carbonatgruppen mit einem Polyol oder einer Polycarbonsäure. So können auch epoxidgruppenhaltige Umsetzungsprodukte von niedrigviskosen Polyglycidylethern von Polyalkoholen und Polyphenolen, vorzugsweise flüssiger Glycidylether auf Basis Bisphenol A mit einem Epoxidäquivalent von 180 bis 190 mit z.B. Dimerfettsäuren, Polyglycoldisäuren, carboxylgruppenhaltigen Oligomeren des Polyacrylnitrilbutadiens (Hycar-Typen), carboxyfunktionellen Polyether-Oligomeren und carboxyfunktionellen Acryl-Oligomeren verwendet werden.

Das Molekulargewicht (Gewichtsmittel) von Komponente (B), bestimmt mittels Gelchromatographie (Polystyrolstandard), liegt üblicherweise im Bereich von etwa 300 bis etwa 50000, vorzugsweise etwa 300 bis etwa 20000, und die Epoxidäquivalentgewichte zwischen 150 und 25000, vorzugsweise 150 und 10000.

Komponente (B) und Härter (A) werden im allgemeinen in solchen Verhältnissen gemischt, daß das Äquivalent-Verhältnis von aktiven NH-Gruppen in (A) zu Epoxid-und/oder cycl. Carbonatgruppen in (B) 0,8 bis 1,5, vorzugsweise 0,9 bis 1,1 beträgt. Zumeist wird hierfür die Menge an (A) bei 5 bis 95 Gew.-%, vorzugsweise bei 20 bis 70 Gew.-%, bezogen auf die Summe aus (A) und (B), liegen. Auf diese Weise wird in der Regel eine ausreichende Vernetzungsdichte erhalten.

Als weitere Bestandteile sind in diesen härtbaren Mischungen gegebenenfalls auch Verdünnungsmittel (C) vorhanden, im allgemeinen in Mengen von 1 bis 40, vorzugsweise 5 bis 20 Gew.-%, bezogen auf Komponente (A). Der Gesamtfeststoffgehalt derartiger, (C) und gegebenenfalls auch (D) enthaltender

Systeme liegt im allgemeinen zwischen etwa 20 und 80 Gew.-%, vorzugsweise 30 und 60 Gew.-% Beispielsweise seien hier als (C) genannt: Wasser sowie organische Lösungsmittel, wie Ethylenglykol-Mono- bzw. Diether, Propylenglykol-Mono-bzw. Diether, Butylenglykol-Mono- bzw. Diether von Monoalkoholen mit einem gegebenenfalls verzweigten Alkylrest von 1 bis 6 Kohlenstoffatomen, Tetrahydrofuran, aliphatische Alkohole mit gegebenenfalls verzweigten Alkylresten von 1 bis 12 Kohlenstoffatomen, wie Methanol, Ethanol, Propanol, Butanol, araliphatische oder cycloaliphatische Alkohole wie Benzylalkohol oder Cyclohexanol, (cyclo)aliphatische oder aromatische Kohlenwasserstoffe, wie Hexan, Heptan, Cyclohexan, Toluol, Xylole, Solvesso® oder Ketone, wie Aceton Methylisobutylketon und Cyclohexanon. Der Siedepunkt dieser Lösungsmittel liegt bevorzugt nicht über 210 °C. Auch Gemische der verschiedenen Verdünnungsmittel sind möglich.

Im Falle von Wasser als Verdünnungsmittel (C) kann der Anteil an organischen Lösungsmittel 0,01 bis 20, vorzugsweise 0,5 bis 10 Gew.-%, bezogen auf die Summe aus Komponente (A) und Wasser, betragen.

Hydroxylgruppenhaltige Lösungsmittel, wie Benzylalkohol, 2-Methylbenzylalkohol, 1-Phenylethanol, 2-Phenoxyethanol, Furfurylalkohol, Pineöl und Alkohole mit 2 bis 18 Kohlenstoffatomen, wie n-Butanol, Ethylhexylalkohol, Ethylglykol, Methylglykol, Methoxypropanol, Ethoxypropanol wirken dabei im allgemeinen beschleunigend auf die Härtungsreaktion.

Als übliche Zusatzstoffe im Sinne von (D), die eventuell in der erfindungsgemäßen Kombination vorhanden sein können, seien hier beispielsweise Beschleuniger bzw. Härtungskatalysatoren, weitere Härter und zusätzliche härtbare Harze oder Extenderharze sowie die üblichen Lackadditive wie Pigmente, Pigmentpasten, Antioxidantien, Verlauf- bzw. Verdickungsmittel (Thixotropierungsmittel), Entschäumer und/oder Netzmittel, Reaktivverdünner, flammhemmende Stoffe udgl. genannt. Diese Additive können den härtbaren Mischungen gegebenenfalls erst unmittelbar vor der Verarbeitung zugegeben werden.

Als Beschleuniger bzw. Härtungskatalysatoren können neben den obigen hydroxylgruppenhaltigen Lösungsmitteln beispielsweise auch Phenole und Alkylphenole mit 1-12 C-Atomen in der Alkylgruppe wie Kresol, die verschiedenen Xylenole, Nonylphenol, Polyphenole wie Bisphenol A und F, OH-gruppenhaltige aromatische Carbonsäuren wie Salicylsäure, Benzoesäure, p-Hydroxybenzosäure sowie tert. Amine, wie Dimethylaminobenzylamin, 1,3,5-Tris-(dimethylamino)phenol udgl. eingesetzt werden.

Als zusätzliche Härter kommen die üblichen Epoxyharzhärter in Frage, wie basische Härter (Aminhärter), beispielsweise Polyamine, Mannich-Basen und Addukte von Polyaminen (im Überschuß) an Polymeren, wie Polyepoxide; weiterhin phenolmodifizierte Aminhärter sowie übliche Polyamidoamine oder Polyimidazoline, die durch Kondensation von einbasischen Fettsäuren und/oder polymeren Fettsäuren, erhalten durch katalytische Polymerisation von ein- oder mehrfach ungesättigten Fettsäuren oder durch Copolymerisation von polymerisationsfähigen Verbindungen, wie z.B. Styrol, hergestellt werden. Bezüglich weiterer üblicher Härter sei beispielsweise auf die EP-Offenlegungsschrift 272 595 verwiesen.

Zusätzlich härtbare Harze im Sinne der Komponente (D) sind zum Beispiel Kohlenwasserstoffharze, Phenoxyharze, Phenolharze, Polyurethanharze, Polysulfide (Thiokole), reaktive, flüssige Polymere des Butadiens bzw. entsprechende Acrylnitril/Butadien-Copolymere (Hycar-Typen), während als übliche Extenderharze hier unter anderem nicht-reaktive Epoxidharz-Modifizierungsmittel, Teere, Phthalsäureester und Cumaronöle genannt seien.

Geeignete Füllstoffe sind zum Beispiel Quarzmehl, Silicate, Kreide, Gips, Schwerspat, Titandioxid, Ruß, Metallpulver, organische und anorganische Fasern udgl.

Zur Herstellung der erfindungsgemäßen härtbaren Mischungen werden die Komponenten (A) und (B) sowie gegebenenfalls zusätzlich (C) und (D) gemischt. Bei Komponenten mit niedriger Viskosität kann dies in Substanz erfolgen, wobei gegebenenfalls auf höhere Temperaturen erwärmt wird. Produkte höherer Viskosität werden vor der Mischung in den erwähnten Verdünnungsmitteln gelöst oder dispergiert.

Die härtbaren Mischungen der Erfindung können vielfältig verwendet werden, z.B. als Bestandteil von Lacken zum Beschichten der verschiedensten organischen und anorganischen Substrate, wie Metalle, Beton, Faserzement, Glas, Keramik, Gummi, Leder, Holz, Textilien, Kunststoffe, ferner zur Herstellung von dickschichtigen Bodenbeschichtungen und Zwischenbeschichtungen. Insbesondere eignen sich die erfindungsgemäßen Mischungen für Überzüge, Klebstoffe, Kitte, Dichtungsmassen und Formteile auf vielerlei Anwendungsgebieten, wo gute Haftung, hohe Schlag- und Stoßfestigkeit und verbesserte Flexibilität und Elastizität gefordert werden, wie z.B. auf dem Bausektor zu rißüberbrückenden Beschichtungen und Fugenausfüllungen sowie als Zusatz zu Kunststoffzementen.

Der Auftrag der Mischungen kann nach den üblichen Methoden erfolgen, wie Streichen, Sprühen, Rakeln, Tauchen, Gießen, Aufwalzen udgl. Die Überzüge werden dann üblicherweise bei Raumtemperatur oder gegebenenfalls bei erhöhten Temperaturen gehärtet.

Die nachfolgenden Beispiele erläutern die Erfindung.

**Beispiele**

I. Herstellung der Polyamidoamin-Härtungskomponente (A)

1) 1234 g (1,92 Mol) Polyglycoldisäure (ca. 10-12 Einheiten -O-$CH_2$-$CH_2$-; SZ: ca. 174) wurden in einem Vierhalskolben mit Rührer, Thermometer und Destillationsapparatur unter Stickstoffatmosphäre mit 595 g (4,37 Mol) m-Xylylendiamin versetzt. Dabei trat durch Exothermie ein Temperaturanstieg auf ca. 80 °C ein. Innerhalb von 30 Minuten wurde weiter auf 150 °C erwärmt und 1 Stunde bei 150 °C gehalten, wobei die Destillation von Wasser einsetzte. Innerhalb von 2 Stunden wurde dann auf 170 °C geheizt und 6 Stunden bei dieser Temperatur gehalten. Das Reaktionsprodukt hatte eine Säurezahl von <1 mg KOH/g, eine Aminzahl von 146 mg KOH/g und eine Viskosität (gemessen im Ubbelohde-Viskosimeter) von 2900 mPa•s (25 °C). Das Wasserstoffaktiväquivalentgewicht (= HAV) betrug 177.

2) 900 g Polyamidoamin-Härtungsmittel gemäß Beispiel 1 wurden mit 100 g des Härtungsmittels C (siehe Vergleichsversuche) verrührt. Der HAV-Wert der Mischung betrug 178.

3) 1186 g (1,89 Mol) Polyglycoldisäure (ca. 10-12 Einheiten -O-$CH_2$-$CH_2$-; SZ: ca. 174) wurden mit 514 g (3,78 Mol) m-Xylylendiamin entsprechend dem Beispiel 1) umgesetzt. Das Reaktionsprodukt hatte eine Säurezahl von <1 mg KOH/g, eine Aminzahl von 122 mg KOH/g und eine Viskosität von 4400 mPa•s (25 °C). Der HAV-Wert betrug 216.

4) 950 g Polyamidoamin-Härtungsmittel gemäß Beispiel 3 wurden mit 50 g "Accelerator 399" (Texaco; Kombination aus Piperazin/Alkanolamin); verrührt. Die Mischung hatte eine Viskosität von 3400 mPa•s (25 °C) und einen HAV-Wert von 227.

5) 1971 g (8,21 Mol) 3,6,9-Trioxaundecandisäure (SZ: ca. 467) wurden mit 1429 g (12,32 Mol) 2-Methyl-pentandiamin entsprechend dem Beispiel 1) umgesetzt. Das Reaktionsprodukt hatte eine Säurezahl von 2,5 mg KOH/g, eine Aminzahl von 144 mg KOH/g und eine Viskosität von 72800 mPa•s (25 °C). Der HAV-Wert betrug 189.

6) 950 g Polyamidoamin-Härtungsmittel gemäß Beispiel 5 wurden mit 50 g Accelerator 399 (Texaco) verrührt. Die Mischung hatte eine Viskosität von 52400 mPa•s (25 °C). Der HAV-Wert betrug 199.

7) 2204 g (3,41 Mol) Polyglycoldisäure (ca. 10-12 -O-$CH_2$-$CH_2$-Einheiten; SZ: ca. 174) wurden mit 1196 g (7,02 Mol) Isophorondiamin entsprechend dem Beispiel 1) umgesetzt. Das Reaktionsprodukt hatte eine Säurezahl von 1,8 mg KOH/g, eine Aminzahl von 114 mg KOH/g und eine Viskosität von 7370 mPa•s (25 °C). Der HAV-Wert betrug 233.

8) 950 g Polyamid-Härtungsmittel gemäß Beispiel 7 werden mit 50 g Accelerator 399 (Texaco) verrührt. Die Mischung hatte eine Viskosität von 6400 mPa•s (25 °C) und einen HAV-Wert von 245.

9) 1978 g (3,07 Mol) Polyglycoldisäure (ca. 10-12 -O-$CH_2$-$CH_2$-Einheiten; SZ: ca. 174) wurden mit 1023 g (7,0 Mol) Triethylentetramin entsprechend dem Beispiel 1) umgesetzt. Das Reaktionsprodukt hatte eine Säurezahl von 1,8 mg KOH/g, eine Aminzahl von 374 mg KOH/g und eine Viskosität von 2800 mPa•s (25 °C). Der HAV-Wert betrug 96.

10) 2646 g (4,10 Mol) Polyglycoldisäure (ca. 10-12 -O-$CH_2$-$CH_2$-Einheiten; SZ: ca. 174) wurden mit 954 g (8,22 Mol) 2-methyl-pentandiamin entsprechend dem Beispiel 1) umgesetzt. Das Reaktionsprodukt hatte eine Säurezahl von 2,0 mg KOH/g, eine Aminzahl von 123 mg KOH/g und eine Viskosität von 1897 mPa•s (25 °C). Der HAV-Wert betrug 210.

11) 1506 g des Polyaminoamids aus Beispiel 1) wurden auf 40 °C erwärmt und mit 195 g eines flüssigen Epoxidharzes auf Bisphenol-A-Basis mit einem Epoxidäquivalent von 182 versetzt. Die Temperatur stieg innerhalb von 30 Minuten auf 110 °C an. Nach Abklingen der Exothermie wurde weitere 3 Stunden bei 100 °C gehalten. Das Reaktionsprodukt hatte eine Viskosität von 28940 mPa•s (25 °C), eine Aminzahl von 134 mg KOH/g und einen HAV-Wert von 228. Die Viskosität, gemessen 80 %ig in Wasser, betrug 1680 mPa•s (25 °C) und gemessen 80 %ig in Methoxypropanol 1250 mPa•s (25 °C).

II. Vergleichsversuche A bis F (Härter gemäß Stand der Technik)

Die Vergleichshärter besaßen folgende Kenndaten:

| Bez. | Typ | HAV-Wert | Viskosität 25 °C mPa•s | Topfzeit mit 100 g Bisphenol-A-Epoxidharz (EV 183) in h |
|---|---|---|---|---|
| A | m-Xylylendiamin | 34 | 7 | 1,9 |
| B | modifiziertes Polyamin (Epoxidharzaddukt)[1] | 113 | 4000 | 0,6 |
| C | modifiziertes aliphat. Polyamin[2] | 190 | 6000 | 0,15 |
| D | Polyamidoamin[3] | 105 | 30000 | 2 |
| E | Polyamidoamin[4] | 100 | 10000 | 2,5 |
| F | Polyamidoamin[5] | 100 | 1000 | 1 |

1) ®Beckopox-Spezialhärter VEH 2621
2) ®Beckopox-Spezialhärter EH 611
3) ®Beckopox-Spezialhärter EH 652
4) ®Beckopox-Spezialhärter EH 654
5) ®Beckopox-Spezialhärter EH 655

III. Beispiele für elastische Vergußmassen

Jeweils 70 g eines flüssigen Epoxidharzes auf Bisphenol-Basis mit einem Epoxidäquivalent (EV) von 183 wurden mit der dem HAV-Wert entsprechenden Menge Härtungsmittel der erfindungsgemäßen Beispiel 1 bis 11 vermischt, in runde Metallformen von 10 mm Höhe und 75 mm Durchmesser gefüllt und 24 Stunden bei 50 °C bzw. 7 Tage bei Raumtemperatur gehärtet.
In gleicher Weise wurden 100 g des Epoxidharzes mit der dem HAV-Wert entsprechenden Menge Vergleichshärtungsmittel vermischt und ausgehärtet. Die erhaltenen Formkörper wurden der Schlagprüfung nach ASTM D 2794 in 20 inch-pound-(ip) Schritten bei Raumtemperatur und bei Werten über 160 ip zusätzlich nach Lagerung von mind. 24 Stunden bei -28 °C (sofort nach Entnahme aus dem Gefrierschrank) unterzogen, sowie eine Beurteilung der Oberfläche und des Elastizitätsverhaltens (manuell) vorgenommen. Die Ergebnisse dieser Prüfung sind in Tabelle 1 zusammengestellt.

Tabelle 1

| Härtungsmittel | Formkörper gehärtet 24 h 50 °C | | | Formkörper gehärtet 7 d bei RT | | |
|---|---|---|---|---|---|---|
| Beispiel | Eigenschaften | ip RT *) | ip -28 °C | Eigenschaften | ip RT | ip -28 °C |
| 1) | sehr zähelastisch | >160 | >160 | sehr zähelastisch | >160 | >160 |
| 2) | sehr zähelastisch | >160 | >160 | sehr zähelastisch | >160 | >160 |
| 3) | sehr zähelastisch | >160 | >160 | zähelastisch | >160 | >160 |
| 4) | sehr zähelastisch | >160 | >160 | zähelastisch | >160 | >160 |
| 5) | hart elastisch | >160 | 140 | hart elastisch | >160 | 60 |
| 6) | hart elastisch | >160 | >160 | hart elastisch | >160 | >160 |
| 7) | sehr zähelastisch | >160 | >160 | sehr zähelastisch | >160 | 60 |
| 8) | sehr zähelastisch | >160 | >160 | sehr zähelastisch | >160 | 80 |
| 9) | hart elastisch | >160 | >160 | hart elastisch | >160 | >160 |
| 10) | sehr zähelastisch | >160 | >160 | sehr zähelastisch | >160 | >160 |
| 11) | sehr zähelastisch | >160 | >160 | sehr zähelastisch | >160 | >160 |
| A (Vergleich) | hart | 60 | | hart | 20 | |
| B (Vergleich) | hart | 100 | | hart | 60 | |
| C (Vergleich) | hart | >160 | | hart | >160 | 100 |
| D (Vergleich) | hart | 60 | | hart | 60 | |
| E (Vergleich) | hart | 100 | | hart | 40 | |
| F (Vergleich) | hart | >160 | >160 | hart | 40 | |

*) RT = Raumtemperatur

IV. Beispiele für elastifizierte Beschichtungsmittel

Jeweils 100 g eines flüssigen Epoxidharzes auf Bisphenol-A-Basis mit einem Epoxidäquivalent von 182 wurden mit der dem HAV-Wert entsprechenden Menge Härtungsmittel der erfindungsgemäßen Beispiele 1), 5), 6), 7), 8) und 11) sowie der Vergleichsbeispiele B und F vermischt und eine 2 mm dicke Schicht auf eine Betonplatte mit einer Grundfläche von 8 x 16 cm aufgebracht.
Nach 14 Tagen Aushärtungszeit bei Umgebungstemperatur wurde an einer Sollbruchstelle ein 1 mm breiter Riß durch Bruch der Betonplatte erzeugt. Die auf dem Beton befindliche ausgehärtete Schicht wurde auf ihre rißüberbrückende Eigenschaft beurteilt (siehe Tabelle 2).

Tabelle 2

| Härtungsmittel | g Härtungsmittel pro 100 g Epoxidharz | Eigenschaft der Beschichtung | |
|---|---|---|---|
| Beispiel | | | |
| 1) | 97,4 | kein Riß in der Beschichtung | klebfreie Oberfläche |
| 5) | 104,0 | " | " |
| 6) | 109,5 | " | " |
| 7) | 128,2 | " | " |
| 8) | 134,8 | " | " |
| 11) | 124,6 | " | " |
| B (Vergleich) | 62,2 | Beschichtung gerissen | " |
| F (Vergleich) | 55,0 | " | stark klebrige Oberfläche |

V. Beispiele für elastische Klebstoffsysteme

Flüssiges Epoxidharz auf Bisphenol-A-Basis mit einem Epoxidäquivalent von 182 wurde mit dem jeweiligen Härtungsmittel bzw. Härtungsmittelgemisch in den in Tab. 3 angegebenen Mengen verrührt und zu Filmen vergossen bzw. für Aluminium/Aluminium-Verklebungen eingesetzt.

Prüfung der Reißfestigkeit und Bruchdehnung

Aus gegossenen Filmen von 1-2 mm Schichtdicke (Härtungszeit 3 Tage; Raumtemperatur) wurden nach DIN 43455 Prüfkörper gestanzt und die Reißfestigkeit und Bruchdehnung bestimmt.

Prüfung der Zugscherfestigkeit

Aluminiumprüfstreifen von ca. 10 cm Länge und 2,5 cm Breite wurden nach dem pickling-Verfahren vorbehandelt und auf einer Fläche von 2,5 x 1,0 cm verklebt. Die Aushärtung erfolgte 24 Stunden bei Raumtemperatur und danach noch 30 Minuten bei 120 °C. Nach weiteren 24 Stunden Raumtemperaturlagerung wurde die Zugscherfestigkeit nach DIN 53283 bestimmt.
Die Ergebnisse der Prüfungen sind in Tabelle 3 zusammengestellt.

Tabelle 3

| | Vergleich | | | | | | | |
|---|---|---|---|---|---|---|---|---|
| Gewichtsteile | 53 | 94 | 115 | 120 | 124 | 130 | 100 | 106 |
| Härtungsmittel pro 100 g Epoxidharz gemäß Beispiel | F | 1) | 3) | 4) | 7) | 8) | 5) | 6) |
| Gelzeit | 2h 40′ | 4h 45′ | 5h 20′ | 2h 25′ | 7h 40′ | 4h 15′ | 3h 10′ | 1h 10′ |
| Zugscherfestigkeit ($N/mm^2$) | 14,8 | 8,8 | 7,1 | 7,5 | 9,0 | 10,5 | 6,2 | 4,2 |
| Reißfestigkeit ($N/mm^2$) | 55 | 20,5 | 13,0 | 11,4 | 20,5 | 22,3 | 16,9 | 22,9 |
| Bruchdehnung % | 5 | 104 | 98 | 106 | 93 | 105 | 130 | 109 |

Aus den Ergebnissen der Tabelle 1 ist die höhere Schlag-und Stoßfestigkeit und das günstigere Tieftemperaturverhalten der erfindungsgemäß herstellbaren Formkörper gegenüber denjenigen der Vergleichsbeispiele ersichtlich. In Tabelle 2 werden Beispiele für die hervorragenden rißüberbrückenden Eigenschaften und in Tabelle 3 Beispiele für Klebstoffe mit hoher Elastizität der erfindungsgemäß erhältlichen Produkte gegenüber dem Stand der Technik angegeben.

VI. Beispiele für elastische Formkörper

Flüssiges Epoxidharz auf Bisphenol-A-Basis mit einem Epoxidequivalent von ca. 180 wurde mit dem jeweiligen Härtungsmittel bzw. Härtungsmittelgemisch in den in Tabelle 4 angegebenen Mengen verrührt und in eine Form gegossen. Die Härtung erfolgte 72 Stunden bei Raumtemperatur. Auf diese Weise wurden 4 mm starke Platten erhalten, die nach dem Entformen noch 2 Stunden bei 100 °C gealtert wurden. Aus diesen Platten wurden die entsprechenden Prüfkörper für die in Tabelle 4 angegebenen Prüfungen angefertigt.

Tabelle 4

| | | | |
|---|---|---|---|
| Epoxidharz ®Beckopox EP 116 | 100 | 100 | 100 |
| Vergleichshärtungsmittel B | 62,2 | | |
| Härtungsmittel nach Beispiel 1) | | 97,4 | |
| Härtungsmittel nach Beispiel 8) | | | 134,8 |
| Dehnung bei Höchstzugkraft nach DIN 53 455 % | 2,3 | 73,8 | 78,0 |
| Biegesteifigkeit (E•I) N•$cm^2$ nach DIN 53 864 | 62,4 | 2,8 | 14,7 |

**Ansprüche**

1. Verwendung von primäre und/oder sekundäre Aminogruppen enthaltenden Polyamidoaminen (A) als Härter für epoxygruppenhaltige Verbindungen (B), dadurch gekennzeichnet, daß als Polyamidoamine (A) solche Verbindungen eingesetzt werden, die erhalten wurden durch Polykondensation von (a) Verbindungen aus der Gruppe Dicarbonsäuren, die Oxalkylengruppen enthalten, oder deren Derivate mit (b) Polyaminen, die mindestens zwei, mit (a) kondensationsfähige Aminogruppen enthalten.

2. Verwendung nach Anspruch 1, dadurch gekennzeichnet, daß die Polyamidoamine (A) Aminzahlen von 50 bis 500 mg KOH/g und Wasserstoffaktiväquivalentgewichte von 50 bis 500 aufweisen.

3. Verwendung nach Anspruch 1 und/oder 2, dadurch gekennzeichnet, daß die Polyamidoamine (A) ein mittleres Molekulargewicht $M_n$ von 200 bis 2500 besitzen.

4. Verwendung nach mindestens einem der Ansprüche 1 bis 3, dadurch gekennzeichnet, daß als Verbindung (a) solche der Formel (I)

$R^2OOC-CH_2-[-O-R^1-]_nO-CH_2-COOR^2$ (I)

eingesetzt werden, in der bedeuten
$R^1$ = Alkylenrest mit 2 bis 5 C-Atomen;
$R^2$ = unabhängig voneinander Wasserstoff oder ein Alkylrest mit 1 bis 6 C-Atomen;
n = 0 oder eine ganze Zahl von 1 bis 300.

5. Verwendung nach Anspruch 4, dadurch gekennzeichnet, daß $R^1$ in Formel (I) einen Ethylenrest und n 1 bis 50 bedeuten.

6. Verwendung nach mindestens einem der Ansprüche 1 bis 5, dadurch gekennzeichnet, daß die Polyamine (b) die Formel (II)

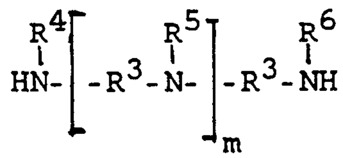

(II)

besitzen, in der bedeuten
$R^3$ = unabhängig voneinander zweiwertiger Kohlenwasserstoffrest mit 1 bis 20, vorzugsweise Alkylenrest mit 1 bis 20 C-Atomen, Cycloalkylenrest mit 5 bis 12 C-Atomen oder Aralkylenrest mit 7 bis 12 C-Atomen;
$R^4$, $R^5$, $R^6$ = unabhängig voneinander Wasserstoff, Kohlenwasserstoffrest mit 1 bis 20 C-Atomen, vorzugsweise Alkylrest mit 1 bis 20 C-Atomen, Cycloalkylenrest mit 5 bis 12 C-Atomen oder Aralkylenrest mit 7 bis 12 C-Atomen, wobei diese Reste auch durch Heteroatome unterbrochen sein können oder
$R^4$ und $R^5$ = Teil eines Ringsystems mit 3 bis 8 C-Atomen;
m = 0 oder eine ganze Zahl von 1 bis 8.

7. Verwendung nach mindestens einem der Ansprüche 1 bis 6, dadurch gekennzeichnet, daß als Verbindungen (a) solche aus der Gruppe 3,6-Dioxaoctandisäure, 3,6,9-Trioxaundecandisäure und Polyglycoldisäure mit einem Molgewicht von 400 bis 600 und als Polyamine (b) solche aus der Gruppe 2-Methylpentandiamin, Diethylentriamin, Triethylentetramin, Isophorondiamin, m-Xylylendiamin und Trimethylhexamethylendiamin eingesetzt werden.

8. Verwendung nach mindestens einem der Ansprüche 1 bis 7, dadurch gekennzeichnet, daß die Polyamidoamine (A) mit epoxygruppenhaltigen Verbindungen vorvernetzt sind.

9. Verwendung nach Anspruch 8, dadurch gekennzeichnet, daß 0,1 bis 50 % des aktiven Wasserstoffs der Polyamidoamine (A) mit den epoxygruppenhaltigen Verbindungen vorvernetzt sind.

10. Härtbare Mischungen, enthaltend Polyamidoamine (A) gemäß mindestens einem der Ansprüche 1 bis 9, epoxygruppenhaltige Verbindungen (B) gemäß Anspruch 1, gegebenenfalls Verdünnungsmittel (C), sowie gegebenenfalls Zusatzstoffe (D).

11. Härtbare Mischungen nach Anspruch 10, dadurch gekennzeichnet, daß die Menge an Polyamidoamine (A) 5 bis 95 Gew.-%, bezogen auf die Summe von (A) und (B), beträgt.

12. Härtbare Mischungen nach Anspruch 10 und/oder 11, dadurch gekennzeichnet, daß die Epoxidäquivalentgewichte der epoxygruppenhaltigen Verbindungen (B) zwischen 150 und 10000 liegen.

13. Härtbare Mischungen nach mindestens einem der Ansprüche 10 bis 12, dadurch gekennzeichnet, daß die epoxygruppenhaltigen Verbindungen (B) im Mittel zwei Epoxygruppen pro Molekül enthalten.

14. Härtbare Mischungen nach mindestens einem der Ansprüche 10 bis 13, dadurch gekennzeichnet, daß als Verdünnungsmittel (C) Wasser oder Gemische aus Wasser und organischen Lösungsmitteln dienen.